(19) Europäisches Patentamt
European Patent Office
Office européen des brevets

(11) **EP 4 746 243 A1**

(12) **EUROPEAN PATENT APPLICATION**

(43) Date of publication:
**20.05.2026 Bulletin 2026/21**

(21) Application number: **25213523.1**

(22) Date of filing: **05.11.2025**

(51) International Patent Classification (IPC):
**H02J 7/62** (2026.01)

(52) Cooperative Patent Classification (CPC):
**H02J 7/62; B25F 5/00; H02J 7/977**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.11.2024 CN 202411630635
09.04.2025 CN 202510442901
26.08.2025 CN 202511203163**

(71) Applicant: **Nanjing Chervon Industry Co., Ltd.
Nanjing, Jiangsu 211106 (CN)**

(72) Inventors:
• **JI, Yongchao**
**Nanjing, Jiangsu 211106 (CN)**
• **LIU, Weixuan**
**Nanjing, Jiangsu 211106 (CN)**
• **YUAN, Yongjie**
**Nanjing, Jiangsu 211106 (CN)**
• **WEI, Junyu**
**Nanjing, Jiangsu 211106 (CN)**

(74) Representative: **Sun, Yiming
HUASUN Patent- und Rechtsanwälte
Friedrichstraße 33
80801 München (DE)**

(54) **OVERCURRENT PROTECTION METHOD FOR A BATTERY PACK AND POWER TOOL SYSTEM**

(57) A power tool system includes a power tool and a battery pack for supplying power to the power tool, where the battery pack includes a cell assembly and a temperature acquisition unit configured to acquire the temperature of the cell assembly; a current detection unit configured to detect an operating current of the battery pack; and a power management unit connected to the temperature acquisition unit and the current detection unit and configured to manage charging or discharging of the battery pack. The power management unit is configured to output a current prohibition signal for prohibiting the charging or discharging of the cell assembly when a predetermined prohibition duration elapses after the operating current reaches a predetermined value; and adjust the predetermined prohibition duration based on at least two of the operating current, the temperature of the cell assembly, and a characteristic parameter of a cell unit.

EP 4 746 243 A1

## Description

## TECHNICAL FIELD

The present application relates to the technical field of power tools and, in particular, to an overcurrent protection method for a battery pack and a power tool system.

## BACKGROUND

Compared with ordinary cylindrical batteries, full-tab batteries have greatly reduced internal resistance and greatly increased discharge rates through improvements in process and structure. However, after full-tab batteries are assembled into a battery pack, a high-rate discharge current results in rapid temperature rises of electrode sheets of the batteries, and the continuous discharge at a high rate may cause excessively high temperatures of the electrode sheets and a backflow of heat, damaging batteries. Therefore, it is necessary to propose an overcurrent protection strategy for high-rate discharge to restrict long-time and high-rate discharge, avoid damages to the battery pack, and ensure a service life of the battery pack.

This part provides background information related to the present application, and the background information is not necessarily the existing art.

## SUMMARY

An object of the present application is to solve or at least alleviate part or all of the preceding problems. Therefore, an object of the present application is to provide an overcurrent protection method for a battery pack and a power tool system.

To achieve the preceding object, the present application adopts the technical solutions below. A power tool system includes a power tool and a battery pack discharged to the power tool. The battery pack includes a cell assembly including at least one cell unit for storing or outputting electrical energy; and a temperature acquisition unit configured to acquire the temperature of the cell assembly. The system further includes a current detection unit configured to detect an operating current of the battery pack; and a power management unit connected to the temperature acquisition unit and the current detection unit and configured to manage charging or discharging of the battery pack. The power management unit is configured to output a current prohibition signal for prohibiting the charging or discharging of the cell assembly when a predetermined prohibition duration elapses after the operating current reaches a predetermined value. The power management unit is further configured to adjust the predetermined prohibition duration based on at least two of the operating current, the temperature of the cell assembly, and a characteristic parameter of the at least one cell unit.

In some examples, the characteristic parameter of the at least one cell unit includes at least one of the resistance of an electrode sheet, the mass of the electrode sheet, or a specific heat capacity of the electrode sheet of the at least one cell unit.

In some examples, the power management unit is configured to, when the operating current reaches a first predetermined value, acquire a corresponding first threshold and acquire a first predetermined prohibition duration based on the first threshold and at least one of the temperature of the cell assembly, the operating current, or the characteristic parameter of the at least one cell unit.

In some examples, the power management unit is configured to, when the operating current reaches a second predetermined value, acquire a corresponding second threshold and acquire a second predetermined prohibition duration based on the second threshold and at least one of the temperature of the cell assembly, the operating current, or the characteristic parameter of the at least one cell unit.

In some examples, the first predetermined value is different from the second predetermined value, and the first threshold is different from the second threshold.

In some examples, the first predetermined value is different from the second predetermined value, and the first threshold is the same as the second threshold.

In some examples, the power management unit is further configured to output a current permission signal for permitting the charging or discharging of the cell assembly when a predetermined permission duration elapses after the current prohibition signal is output.

In some examples, the power management unit is further configured to adjust the predetermined permission duration based on the temperature of the cell assembly.

In some examples, the power management unit is configured to acquire a corresponding decrement coefficient according to the temperature of the cell assembly and acquire the predetermined permission duration based on the decrement coefficient and a predetermined temperature of the cell assembly; and the power management unit is further configured to determine the predetermined temperature of the cell assembly according to a current temperature of the cell assembly when the operating current reaches the predetermined value.

In some examples, the predetermined prohibition duration is less than or equal to the predetermined permission duration.

In some examples, the predetermined value is greater than or equal to 80.

In some examples, the temperature acquisition unit includes at least one temperature sensor.

In some examples, the power tool system further includes a charger for charging the battery pack.

In some examples, the operating current includes a discharge current or a charge current.

An example provides a power tool system including a power tool and a battery pack discharged to the power tool. The battery pack includes a cell assembly including at least one cell unit for storing or outputting electrical energy; and a temperature acquisition unit configured to acquire the temperature of the cell assembly. The system further includes a current detection unit configured to detect an operating current of the battery pack; and a power management unit connected to the temperature acquisition unit and the current detection unit and configured to manage charging or discharging of the battery pack. The power management unit is configured to output a current prohibition signal for prohibiting the charging or discharging of the cell assembly when a predetermined prohibition duration elapses after the operating current reaches a predetermined value. The power management unit is further configured to adjust the predetermined prohibition duration based on the operating current and/or the temperature of the cell assembly.

An example provides a power tool system including a power tool and a battery pack discharged to the power tool. The battery pack includes a cell assembly including at least one cell unit for storing or outputting electrical energy; and a temperature acquisition unit configured to acquire the temperature of the cell assembly. The system further includes a current detection unit configured to detect an operating current of the battery pack; and a power management unit connected to the temperature acquisition unit and the current detection unit and configured to manage charging or discharging of the battery pack. The power management unit is configured to output a current prohibition signal for prohibiting the charging or discharging of the cell assembly when a predetermined prohibition duration elapses after the operating current reaches a predetermined value. The power management unit is further configured to adjust the predetermined prohibition duration based on the operating current, the temperature of the cell assembly, and a characteristic parameter of the at least one cell unit.

An example provides an overcurrent protection method for a battery pack, where the battery pack includes a cell assembly including at least one cell unit for storing or outputting electrical energy. The overcurrent protection method for a battery pack includes acquiring the temperature of the cell assembly through a temperature acquisition unit; detecting an operating current of the battery pack through a current detection unit; and after detecting that the operating current reaches a predetermined value, setting a threshold according to the operating current, performing time integration based on at least one of the temperature of the cell assembly, the operating current, or a characteristic parameter of the at least one cell unit to obtain a cumulative value, and outputting a current prohibition signal when the cumulative value reaches the threshold.

In some examples, when the operating current reaches a first predetermined value, a corresponding first threshold is acquired, and the time integration is performed based on at least one of the temperature of the cell assembly, the operating current, or the characteristic parameter of the at least one cell unit to obtain a first cumulative value.

In some examples, when the operating current reaches a second predetermined value, a corresponding second threshold is acquired, and the time integration is performed based on at least one of the temperature of the cell assembly, the operating current, or the characteristic parameter of the at least one cell unit to obtain a second cumulative value.

In some examples, the first predetermined value is different from the second predetermined value.

In some examples, the first threshold is different from the second threshold.

In some examples, the first threshold is the same as the second threshold.

In some examples, the first cumulative value is different from the second cumulative value.

In some examples, the predetermined value is greater than or equal to 80.

An example provides an overcurrent protection method for a battery pack, where the battery pack includes a cell assembly having at least one cell unit for storing or outputting electrical energy. The overcurrent protection method for a battery pack includes acquiring the temperature of the at least one cell unit through a temperature acquisition unit; detecting an operating current of the battery pack through a current detection unit; and after detecting that the operating current reaches a predetermined value, setting a threshold according to the operating current, performing time integration based on the temperature of the cell assembly to obtain a cumulative value, and outputting a current prohibition signal when the cumulative value reaches the threshold.

An example provides an overcurrent protection method for a battery pack, where the battery pack includes a cell assembly having at least one cell unit for storing or outputting electrical energy. The overcurrent protection method for a battery pack includes acquiring the temperature of the cell assembly through a temperature acquisition unit; detecting an operating current of the battery pack through a current detection unit; and after detecting that the operating current reaches a predetermined value, setting a threshold according to the operating current, performing time integration based on the temperature of the cell assembly, the operating current, and a characteristic parameter of the at least one cell unit to obtain a cumulative value, and outputting a current prohibition signal when the cumulative value reaches the threshold.

## BRIEF DESCRIPTION OF DRAWINGS

FIG. 1 is a flowchart of an overcurrent protection method for a battery pack according to an example of the present application.

FIG. 2 is a flowchart of another overcurrent protection method for a battery pack according to an example of the present application.

FIG. 3 is a graph showing a comparison of the temperature of a housing and the temperature of an electrode sheet of a battery pack according to an example of the present application.

FIG. 4 is another graph showing a comparison of the temperature of a housing and the temperatures of electrode sheets of a battery pack according to an example of the present application.

FIG. 5 is a table of threshold parameters in an overcurrent protection method for a battery pack according to an example of the present application.

FIG. 6 is a table of time integration in an overcurrent protection method for a battery pack according to an example of the present application.

FIG. 7 is a graph of test data according to an example of the present application.

FIG. 8 is a flowchart of another overcurrent protection method for a battery pack according to an example of the present application.

FIG. 9 is another graph showing a comparison of the temperature of a housing and the temperatures of an electrode sheet of a battery pack according to an example of the present application.

FIG. 10 is a table of threshold parameters in an overcurrent protection method for a battery pack according to an example of the present application.

FIG. 11 is a table of time integration in an overcurrent protection method for a battery pack according to an example of the present application.

FIG. 12 is an electrical schematic of an electrical device system according to an example of the present application.

FIG. 13 is a structural view of an electrical device system according to an example of the present application.

FIG. 14 is a schematic view of part of the structure of a power tool in FIG. 12.

FIG. 15 is a structural view of a battery pack in FIG. 14.

FIG. 16 is an exploded view of a battery pack in FIG. 13.

FIG. 17 is a structural view of another electrical device system according to an example of the present application.

FIG. 18 is a structural view of a charger in FIG. 17.

## DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

To clearly illustrate technical solutions of the present application, an upper side, a lower side, a left side, a right side, a front side, and a rear side are defined in the drawings of the specification.

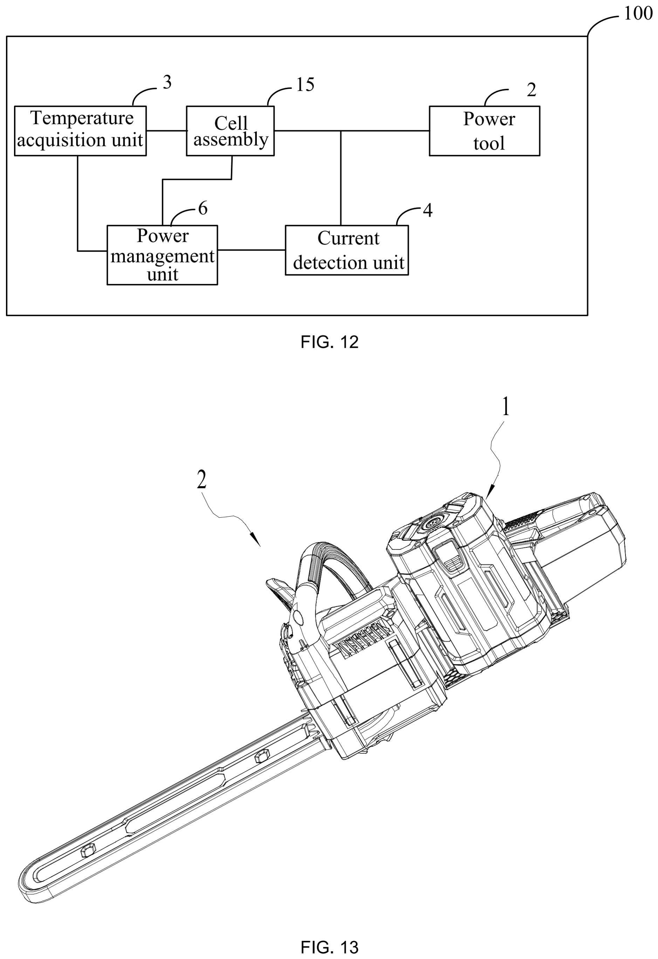

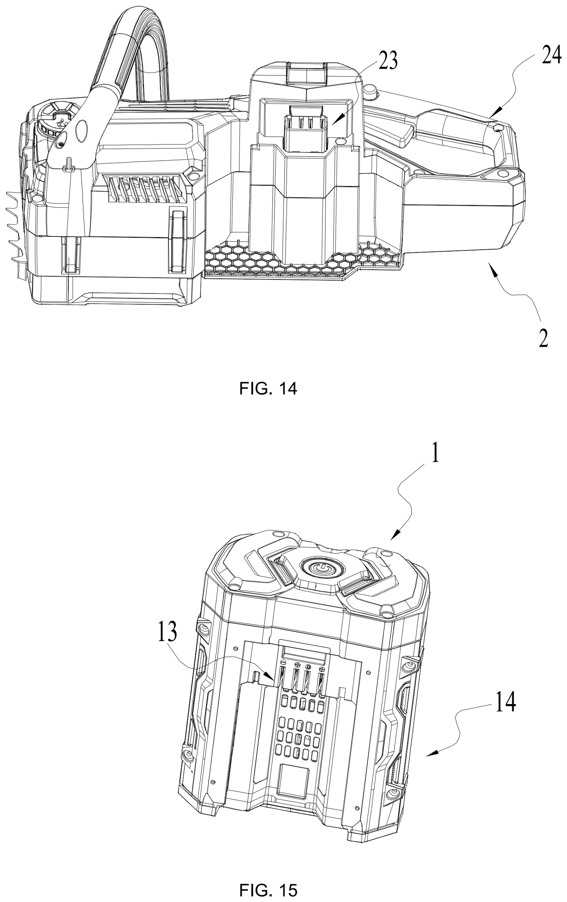

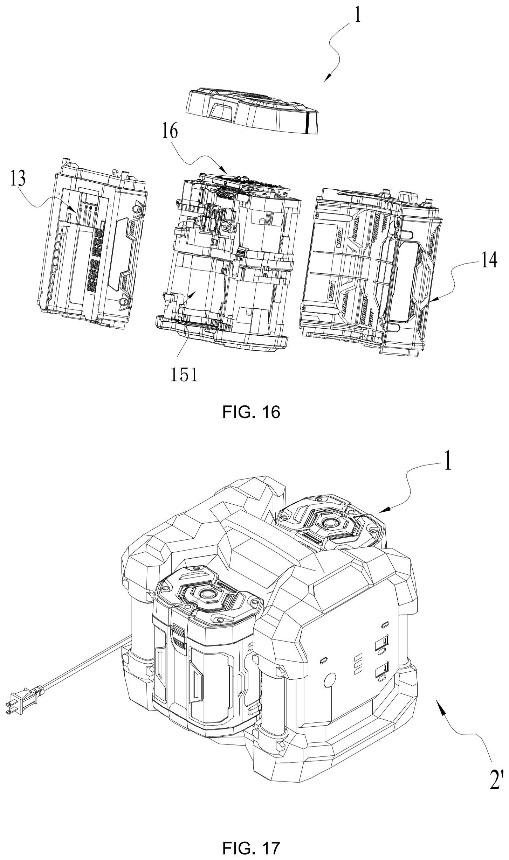

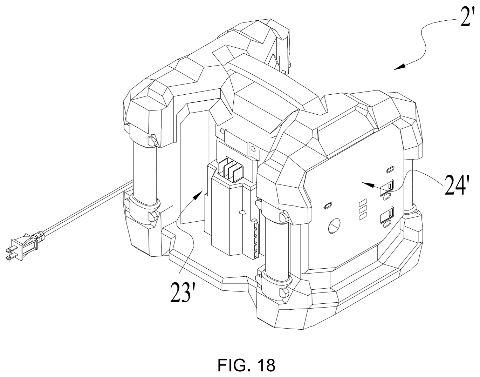

FIGS. 13 to 18 are structural views of an electrical device system of the present application. The electrical device system includes a battery pack 1 and a body 2. The battery pack 1 is coupled to the body 2 and can perform electrical energy transmission with the body 2. In an example, the electrical device system may be a power tool system, and the body 2 is a power tool 2, such as a chainsaw. The power tool 2 is powered by the battery pack 1. The battery pack 1 includes a housing 14, a cell assembly 15 accommodated in the housing 14, a power tool interface 13 disposed on the housing 14, and a first circuit board 16 accommodated in the housing 14. A power management unit is provided on the first circuit board 16 and configured to manage the charging and discharging of the battery pack 1. The power tool interface 13 of the battery pack 1 is coupled to a battery pack interface 23 of the power tool 2, thereby achieving an electrical connection and a communication connection. The power tool 2 further includes a body housing 24, and the battery pack interface 23 is disposed on the body housing 24. In another example, the electrical device system may be a charging system, and the body 2 is a charger 2'. The charger 2' includes a body housing 24', and a battery pack interface 23' is disposed on the body housing 24'. The battery pack 1 is coupled to the charger 2' to implement current transmission. The electrical device system or components (such as the battery pack 1 and the body 2) in the system as examples of the present application can each execute algorithms of the present application. The battery pack of the present application includes, but is not limited to, a lithium iron phosphate battery pack, a lithium battery pack, or a full-tab battery pack.

In some examples, FIG. 12 is a block diagram of a power tool system of the present application. Referring to FIG. 12, in a power tool system 100, the cell assembly 15 may include at least one cell unit for storing or outputting electrical energy, that is, the cell assembly 15 may include one or more cell units. The cell unit may be a smallest power storage unit in the battery pack 1, and cell units in the cell assembly 15 may be connected in series and/or in parallel, which may be specifically designed according to actual requirements and is not specifically limited in the present application.

In some examples, referring to FIGS. 12 to 18, the battery pack 1 may further include a temperature acquisition unit 3 configured to acquire the temperature of the cell assembly 15. The temperature acquisition unit 3 may be disposed on the housing 14. During operation of the battery pack 1, heat generated by the cell assembly 15 is transferred to the housing 14 for accommodating the cell assembly 15, and the temperature acquisition unit 3 can indirectly acquire the temperature of the cell assembly 15 by directly acquiring the temperature on the housing 14.

In some examples, the temperature acquisition unit 3 may include at least one temperature sensor, that is, the temperature acquisition unit 3 may include one or more temperature sensors. When the temperature acquisition unit 3 includes multiple temperature sensors, the temperature sensors may be uniformly distributed on the housing 14, and temperature signals acquired by the temperature sensors are processed, for example, a weighted average of the temperature signals acquired by the temperature sensors is obtained so that the temperature of the cell assembly 15 is acquired.

In some examples, with continued reference to FIGS. 12 to 18, the power tool system 100 may further include a current detection unit 4 configured to detect an operating current of the battery pack 1. The operating current may include a discharge current or a charge current, that is, the current detection unit 4 may detect the charge current of the battery pack 1 in a charging process, or the current detection unit 4 may detect the discharge current of the battery pack 1 in a discharging process.

In some examples, the current detection unit 4 may include a current detection coil which may be disposed at a charge/discharge terminal of the battery pack 1 to be able to detect the charge current of the battery pack 1 in the charging process of the battery pack 1 or detect the discharge current of the battery pack 1 in the discharging process of the battery pack 1.

In some examples, the current detection unit 4 may include at least one of elements such as a detection resistor, a detection inductor, and a detection capacitor. On the premise that the operating current of the battery pack 1 in the power tool system 100 of the present application can be detected, the specific structure of the current detection unit 4 is not limited in the present application.

In some examples, a power management unit 6 may be connected to the temperature acquisition unit 3 and the current detection unit 4 separately so that the power management unit 6 may acquire the temperature of the cell assembly acquired by the temperature acquisition unit 3 and the operating current of the battery pack 1 detected by the current detection unit 4. The power management unit 6 is configured to output a current prohibition signal for prohibiting the charging or discharging of the cell assembly 15 when a predetermined prohibition duration elapses after the operating current reaches a predetermined value; and the power management unit 6 is further configured to adjust the predetermined prohibition duration based on at least two of the operating current, the temperature of the cell assembly 15, and a characteristic parameter of the at least one cell unit.

In some examples, the characteristic parameter of the at least one cell unit includes at least one of the resistance of an electrode sheet, the mass of the electrode sheet, or a specific heat capacity of the electrode sheet of the at least one cell unit. The resistance of the electrode sheet, the mass of the electrode sheet, and the specific heat capacity of the electrode sheet of the cell unit may be measured by corresponding meters and instruments before the cell unit is assembled, and the measured characteristic parameters of the cell unit are stored in corresponding memories so that the power management unit 6 can call the characteristic parameter of the cell unit to conveniently adjust the predetermined prohibition duration. It is to be understood that when the cell assembly 15 includes multiple cell units, the cell units may have the same characteristic parameter or different characteristic parameters, which may be selected according to actual requirements and is not specifically limited in the present application.

In some examples, the predetermined value may be designed according to actual requirements and is not specifically limited in the present application. For example, the predetermined value may be greater than or equal to 80.

In the present application, when the operating current of the battery pack 1 is greater than or equal to the predetermined value, it may be determined that the battery pack 1 has a relatively large charge current or discharge current, and the battery pack 1 is operating in a high-rate charging or discharging state. In the high-rate charging or discharging state, the temperature of the electrode sheet of the cell unit in the battery pack 1 is easy to rise rapidly, and when the temperature is relatively high, a backflow of heat damages the cell unit. In this case, the predetermined prohibition duration in the high-rate charging or discharging state may be determined based on at least two of the operating current of the battery pack 1, the temperature of the cell assembly 15, and the characteristic parameter of the cell unit, and when a continuous operation time of the battery pack 1 reaches the predetermined prohibition duration, the current prohibition signal for prohibiting the charging or discharging of the cell assembly 15 may be output, so that the cell assembly 15 stops being charged or discharged, and no current flows through the electrode sheet of the cell unit in the cell assembly 15. Thus, the temperature of the electrode sheet of the cell unit gradually decreases, thereby preventing the cell unit from being damaged in the long-time and high-rate charging or discharging state and facilitating an increase in the service life of the battery pack.

A specific implementation manner for adjusting the predetermined prohibition duration based on at least two of the operating current of the battery pack 1, the temperature of the cell assembly 15, and the characteristic parameter of the cell unit may include, but is not limited to, performing time integration based on at least two of the operating current of the battery pack 1, the temperature of the cell assembly 15, and the characteristic parameter of the cell unit to determine a cumulative value, and adjusting the predetermined prohibition duration according to the determined cumulative value.

It is to be understood that in the present application, the predetermined prohibition duration may be determined based on at least two of the operating current of the battery pack 1, the temperature of the cell assembly 15, and the characteristic parameter of the cell unit, that is, the predetermined prohibition duration may be determined based on the operating current of the battery pack 1 and the temperature of the cell assembly 15, the predetermined prohibition duration may be determined based on the operating current of the battery pack 1 and the characteristic parameter of the cell unit, the predetermined prohibition duration may be determined based on the temperature of the cell assembly 15 and the characteristic parameter of the cell unit, or the predetermined prohibition duration may be determined based on the operating current of the battery pack 1, the temperature of the cell assembly 15, and the characteristic parameter of the cell unit, which may be specifically designed according to actual requirements and is not specifically limited in the present application.

In some examples, the power management unit 6 is configured to, when the operating current reaches a first predetermined value, acquire a corresponding first threshold and acquire a first predetermined prohibition duration based on the first threshold and at least one of the temperature of the cell assembly 15, the operating current, or the characteristic parameter of the cell unit.

In some other examples, the power management unit 6 is configured to, when the operating current reaches a second predetermined value, acquire a corresponding second threshold and acquire a second predetermined prohibition duration based on the second threshold and at least one of the temperature of the cell assembly 15, the operating current, or the characteristic parameter of the cell unit.

When the operating current reaches the first predetermined value, the first threshold corresponding to the first predetermined value may be acquired, the time integration may be performed based on at least one of the temperature of the cell assembly 15, the operating current, or the characteristic parameter of the cell unit, and a time for which the cumulative value reaches the first threshold may be determined as the first predetermined prohibition duration when the operating current reaches the first predetermined value.

Similarly, when the operating current reaches the second predetermined value, the second threshold corresponding to the second predetermined value may be acquired, the time integration may also be performed based on at least one of the temperature of the cell assembly 15, the operating current, or the characteristic parameter of the cell unit, and a time for which the cumulative value reaches the second threshold may be determined as the second predetermined prohibition duration when the operating current reaches the second predetermined value.

In some examples, the first predetermined value may be different from the second predetermined value, and the first threshold may be the same as or different from the second threshold, that is, different predetermined values may correspond to different thresholds or the same threshold, which may be specifically designed according to actual requirements and is not specifically limited in the present application. The thresholds corresponding to different predetermined values may be determined according to results of multiple tests. That is, comprehensively considering the performance of the battery pack 1, the thresholds corresponding to the predetermined values are determined according to the results of multiple tests so that the thresholds corresponding to the predetermined values can not only satisfy the charging or discharging requirement of the battery pack 1 but also ensure that the battery pack 1 has a relatively long service life.

It is to be understood that an example in which the first predetermined value corresponds to the first threshold and the second predetermined value corresponds to the second threshold is only used for illustration, and in the present application, the operating current may have multiple predetermined values, which may be specifically designed according to actual requirements. In an exemplary example, the predetermined values of the operating current may be divided into eleven gears including Lv0 to Lv10, and a lowest current corresponding to each gear is a predetermined value in this gear. When the operating current reaches the lowest current in a certain gear, it may be determined that the operating current reaches the predetermined value in this gear. At this time, a threshold corresponding to this gear may be determined, the time integration may be performed based on at least one of the temperature of the cell assembly 15, the operating current, or the characteristic parameter of the cell unit to determine the cumulative value, and a time for which the cumulative value reaches the threshold corresponding to this gear is the predetermined prohibition duration in this gear.

In some other examples, when the operating current of the battery pack 1 is less than the predetermined value, it may be determined that the battery pack 1 is operating in a low-rate charging or discharging state and the battery pack 1 has a relatively small charge current or discharge current, the temperature of the electrode sheet of the cell unit in the battery pack 1 changes slowly and can be relatively high only after a relatively long time of accumulation, and the battery pack 1 can be controlled to be continuously charged or discharged according to actual requirements. Meanwhile, to ensure the normal operation of the battery pack 1 in the low-rate charging or discharging state, a conventional overcurrent protection solution may be adopted, for example, a thermistor (such as a negative temperature coefficient (NTC)), an overcurrent protection chip, and the like may be used for overcurrent protection in the charging process or discharging process of the battery pack 1.

In some examples, the power management unit 6 is further configured to output a current permission signal for permitting the charging or discharging of the cell assembly 15 when a predetermined permission duration elapses after the current prohibition signal is output.

After the power management unit 6 outputs the current prohibition signal for prohibiting the charging or discharging of the cell assembly 15, the cell assembly 15 stops being charged or discharged, and the charge current or discharge current no longer flows through the electrode sheet of the cell unit in the cell assembly 15, so that the electrode sheet of the cell unit no longer generates heat, the electrode sheet of the cell unit starts heat dissipation, and the temperature of the electrode sheet of the cell unit gradually decreases. When the temperature of the electrode sheet of the cell unit decreases to a set temperature, it may be considered that the cell assembly 15 can be charged or discharged again. Since the charge current or discharge current flows through the electrode sheet of the cell unit, the temperature of the electrode sheet of the cell unit changes, which is not enough to damage the cell unit and affect the service life of the cell assembly 15. At this time, the power management unit 6 may control the cell assembly 15 to be charged or discharged again. As described above, a time from when the power management unit 6 outputs the current prohibition signal for prohibiting the charging or discharging of the cell assembly 15 to when the temperature of the electrode sheet of the cell unit decreases to the set temperature may be the predetermined permission duration, that is, when the predetermined permission duration elapses after the current prohibition signal is output, the power management unit 6 may output the current permission signal for permitting the charging or discharging of the cell assembly 15 so that the cell assembly 15 can continue to be charged or discharged.

It is to be understood that the predetermined permission duration may be designed according to actual requirements. For example, after the current prohibition signal for charging or discharging is output, the temperature of the cell assembly 15 may be acquired in real time, and a time required for the temperature of the cell assembly 15 to decrease to a predetermined temperature may be determined as the predetermined permission duration, which may be an optimal duration determined according to results of multiple tests.

In some examples, the predetermined prohibition duration may be less than or equal to the predetermined permission duration so that the electrode sheet of the cell unit in the battery pack 1 can have a sufficiently long time for heat dissipation, ensuring that after the power management unit 6 outputs the current permission signal for permitting the charging or discharging of the cell assembly 15, the temperature of the electrode sheet of the cell unit is prevented from being relatively high again because the operating current for charging or discharging the cell assembly 15 flows through the electrode sheet of the cell unit. Thus, after the power management unit 6 outputs the current permission signal for permitting the charging or discharging of the cell assembly 15, the cell assembly 15 can be continuously charged or discharged for a corresponding time, ensuring that the cell assembly 15 can be normally charged or discharged.

In some examples, the power management unit 6 is further configured to adjust the predetermined permission duration based on the temperature of the cell assembly 15.

It is to be understood that the higher the temperature of the cell assembly 15, the longer the time required by the cell assembly 15 for heat dissipation, and accordingly, the longer the predetermined permission duration may be; conversely, the lower the temperature of the cell assembly 15, the shorter the required predetermined permission duration. In an optional example, the predetermined permission duration may be adjusted by the clock period Ts of a crystal oscillator in the power management unit 6 in conjunction with the temperature of the cell assembly 15. For example, a decrement coefficient x in an integration decrement rule is determined according to the temperature of the cell assembly 15, the cumulative value obtained when the power management unit 6 outputs the current prohibition signal for prohibiting the charging or discharging of the cell assembly 15 through the time integration based on at least one of the temperature of the cell assembly, the operating current, or the characteristic parameter of the cell unit may be used as a decrement initial value, and a time for which the decrement initial value is decremented to a decrement set value by an integrated quantity of x times the clock period Ts of the crystal oscillator may be determined as the predetermined permission duration. As described above, when the decrement initial value is decremented to the decrement set value by the integrated quantity of x times the clock period Ts of the crystal oscillator, the power management unit 6 may output the current permission signal for permitting the charging or discharging of the cell assembly 15 so that the cell assembly 15 can be charged or discharged again. The decrement set value may be set according to actual requirements. In some examples, the decrement set value may be 0. In some other examples, the decrement set value may vary with the temperature of the cell assembly.

In an optional example, the power management unit 6 is configured to acquire the corresponding decrement coefficient according to the temperature of the cell assembly 15 and acquire the predetermined permission duration based on the decrement coefficient and the predetermined temperature of the cell assembly 15; and the power management unit 6 is further configured to determine a current temperature of the cell assembly 15 when the operating current reaches the predetermined value as the predetermined temperature.

When the operating current reaches the predetermined value, the power management unit 6 may determine that the operating current reaches the lowest current in a certain gear, determine the threshold corresponding to this gear, and perform the time integration according to a corresponding integration rule based on at least one of the operating current, the temperature of the cell assembly, or the characteristic parameter of the cell unit to acquire the cumulative value. When the cumulative value reaches the threshold corresponding to the gear of the operating current, the power management unit 6 outputs the current prohibition signal for prohibiting the charging or discharging of the cell assembly 15. In the integration process, the current continuously flows through the electrode sheet of the cell unit in the battery pack 1, and the temperature of the electrode sheet of the cell unit continuously increases. Therefore, when the operating current acquired by the power management unit 6 reaches the predetermined value, the temperature of the cell assembly acquired by the temperature acquisition unit 3 is a lowest temperature in the gear to which the predetermined value belongs. The temperature of the cell assembly acquired by the temperature acquisition unit 3 may be determined as the predetermined temperature. After outputting the current prohibition signal for prohibiting the charging or discharging of the cell assembly 15, the power management unit 6 may determine the decrement coefficient corresponding to the temperature according to the temperature of the cell assembly 15 and decrement the cumulative value when the power management unit 6 outputs the current prohibition signal based on the decrement coefficient until the cumulative value is decremented to the predetermined temperature. Then, it may be considered that the temperature of the cell assembly 15 reaches the lowest temperature in this gear, and the current permission signal for permitting the charging or discharging of the cell assembly 15 may be output so that the battery pack 1 can continue to be charged or discharged. The current detection unit 4 continues to detect the operating current of the battery pack 1, and the temperature acquisition unit 3 continues to acquire the temperature of the cell assembly 15 until the operating current of the battery pack 1 reaches the predetermined value again. The integration may be performed again according to an integration rule corresponding to the gear to which the predetermined value belongs. Thus, on the premise that the battery pack 1 is prevented from operating in the high-rate charging or discharging state for a long time, the battery pack 1 can be intermittently charged or discharged, satisfying the normal operation requirement of the power tool 2 or the charger 2' connected to the battery pack 1.

In some examples, referring to FIGS. 12 to 18, a power tool system 100 includes a power tool 2 and a battery pack 1 discharged to the power tool 2. The battery pack 1 includes a cell assembly 15 including at least one cell unit 151 for storing or outputting electrical energy. The power tool system 100 further includes a temperature acquisition unit 3 configured to acquire the temperature of the cell assembly 15. The power tool system 100 further includes a current detection unit 4 configured to detect an operating current of the battery pack. The power tool system 100 further includes a power management unit 6 connected to the temperature acquisition unit 3 and the current detection unit 4 and configured to manage the charging or discharging of the battery pack 1. The power management unit 6 is configured to output a current prohibition signal for prohibiting the charging or discharging of the cell assembly 15 when a predetermined prohibition duration elapses after the operating current of the battery pack 1 reaches a predetermined value. In some examples, the power management unit 6 is further configured to adjust the predetermined prohibition duration based on the operating current of the battery pack 1 and/or the temperature of the cell assembly 15.

In some examples, referring to FIGS. 12 to 18, a power tool system 100 includes a power tool 2 and a battery pack 1 discharged to the power tool 2. The battery pack 1 includes a cell assembly 15 including at least one cell unit 151 for storing or outputting electrical energy. The power tool system 100 further includes a temperature acquisition unit 3 configured to acquire the temperature of the cell assembly 15. The power tool system 100 further includes a current detection unit 4 configured to detect an operating current of the battery pack. The power tool system 100 further includes a power management unit 6 connected to the temperature acquisition unit 3 and the current detection unit 4 and configured to manage the charging or discharging of the battery pack 1. The power management unit 6 is configured to output a current prohibition signal for prohibiting the charging or discharging of the cell assembly 15 when a predetermined prohibition duration elapses after the operating current of the battery pack 1 reaches a predetermined value. In some examples, the power management unit 6 is further configured to adjust the predetermined prohibition duration based on the operating current of the battery pack 1, the temperature of the cell assembly 15, and a characteristic parameter of the cell unit.

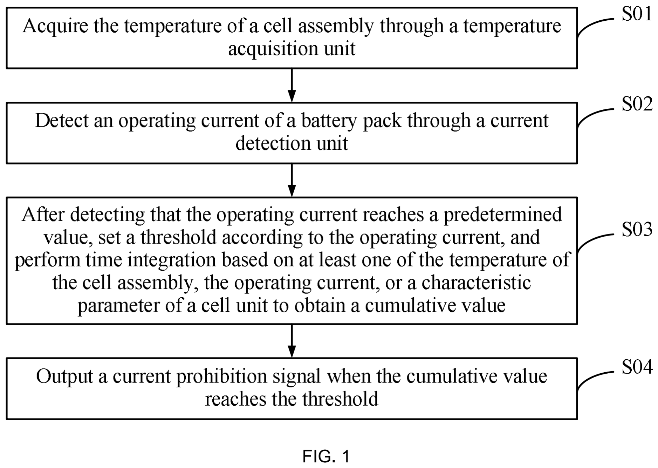

Based on the same application concept, the present application further provides an overcurrent protection method for a battery pack, which is used for protecting a charging or discharging process of the battery pack in the preceding power tool system. The method may be performed by a power management unit of the battery pack, and the power management unit is implemented by hardware and/or software. In some examples, the method may be performed by a power tool or charger connected to the battery pack. Referring to FIG. 1, the overcurrent protection method for the battery pack includes the steps below.

In S01, the temperature of a cell assembly is acquired through a temperature acquisition unit.

The temperature acquisition unit may include at least one temperature sensor and may acquire the temperature of the cell assembly based on the temperature sensor. In some examples, the temperature sensor may be disposed on a housing of the cell assembly to acquire the temperature of the housing of the cell assembly, thereby indirectly determining the temperature of a cell unit in the cell assembly. In some examples, the temperature sensor may be disposed on a surface of a cell unit in the cell assembly, where the cell unit may be a cell unit with a fastest temperature increase in the battery pack or with a highest temperature relative to the other cell units, such as a cell unit at the middle position. In some examples, when the temperature acquisition unit includes multiple temperature sensors, the temperature sensors may be disposed on surfaces of all cell units in the battery pack and are configured to acquire the surface temperatures of all the cell units and record the highest surface temperature as the temperature of the cell assembly. In some examples, the temperature acquisition unit may include no temperature sensor and estimate the temperature of the cell assembly from parameters of the battery pack such as a current.

In S02, an operating current of the battery pack is detected through a current detection unit.

The current detection unit may include a current sensing resistor configured to detect a magnitude of the current of the battery pack. For example, the current detection unit may detect the magnitude of a discharge current or charge current of the battery pack. In some examples, the current detection unit may include no current sensing resistor and perform estimation and acquisition through an algorithm. A method for the above estimation is not described in the present application, and those skilled in the art may acquire the current by a current estimation method in the related art.

In S03, after it is detected that the operating current reaches a predetermined value, a threshold is set according to the operating current, and time integration is performed based on at least one of the temperature of the cell assembly, the operating current, or a characteristic parameter of the cell unit to obtain a cumulative value.

The predetermined value may be designed according to actual requirements. In some examples, the predetermined value may be greater than or equal to 80. After it is detected that the operating current reaches the predetermined value, it may be determined that the battery pack is operating in a high-rate charging or discharging state. To prevent the battery pack from continuously operating in the high-rate charging or discharging state, which causes the temperature of an electrode sheet of the cell unit to rise rapidly and damage the cell unit, the threshold corresponding to the operating current may be determined according to the operating current detected by the current detection unit. Meanwhile, the time integration is performed according to a corresponding integration rule based on at least one of the temperature of the cell assembly, the operating current, or the characteristic parameter of the cell unit to determine the cumulative value. In some examples, a correspondence relationship between operating currents and thresholds may be determined through multiple tests. When the cumulative value is less than the threshold, it can be ensured that the battery pack can be charged or discharged normally.

In S04, a current prohibition signal is output when the cumulative value reaches the threshold.

When the cumulative value reaches the threshold, it may be considered that the temperature of the electrode sheet of the cell unit in the battery pack is relatively high, and if the battery pack continues being charged or discharged, the battery pack may be damaged. The current prohibition signal is output when the cumulative value reaches the threshold so that the battery pack stops being charged or discharged, no current flows through the electrode sheet of the cell unit, and the electrode sheet of the cell unit can undergo heat dissipation, thereby preventing the battery pack from being further charged or discharged to damage the cell unit and facilitating an increase in the service life of the battery pack.

It is to be noted that the overcurrent protection method of the present application is only illustrated above. To more clearly describe the overcurrent protection method of the present application, the overcurrent protection method of the present application is described below through typical examples.

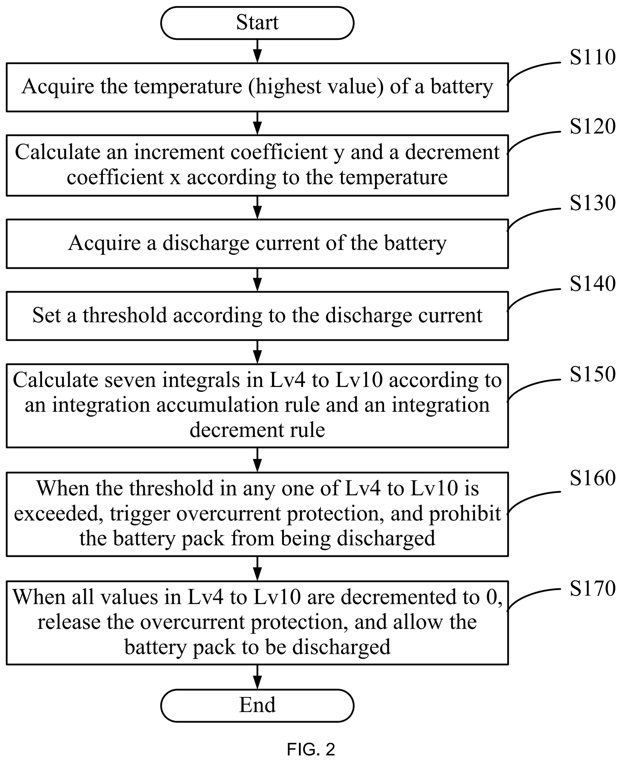

In an optional example, FIG. 2 is a flowchart of an overcurrent protection method for a battery pack according to the present application. This example provides the overcurrent protection method in a charging or discharging process of the battery pack. The method may be performed by a power management unit of the battery pack, and the unit may be implemented by hardware and/or software. Of course, in some examples, the method may be performed by a power tool or charger connected to the battery pack. Referring to FIG. 2, the method includes the steps below.

In S110, the temperature of a cell unit is acquired through a temperature acquisition unit.

The temperature acquisition unit in this example includes a temperature sensor and acquires the temperature of the cell unit through the temperature sensor. In some examples, temperature sensors are disposed on surfaces of all cell units in the battery pack and configured to acquire the surface temperatures of all the cell units and record the highest surface temperature. In some examples, the temperature sensor is disposed on a surface of a cell unit in the battery pack, where the cell unit may be a cell unit with a fastest temperature increase in the battery pack or with a highest temperature relative to the other cell units, such as the central cell unit. In some examples, the temperature acquisition unit includes no temperature sensor and estimates the temperature of the cell unit from parameters of the battery pack such as a current.

In S120, an increment coefficient y and a decrement coefficient x are calculated according to the acquired temperature.

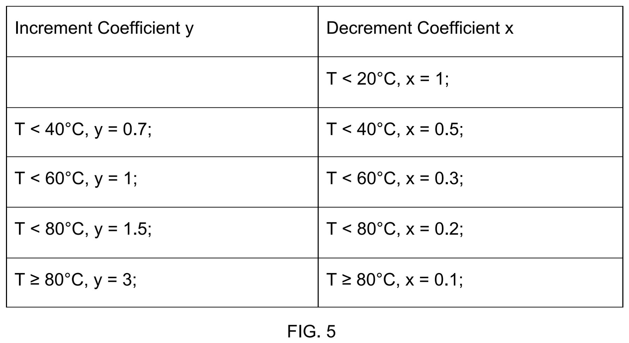

According to the above-acquired temperature, the increment coefficient y or the decrement coefficient x is calculated in conjunction with the table in FIG. 5. For example, when the acquired temperature of the cell unit is lower than 40°C, the increment coefficient y is set to 0.7. When the increment coefficient y is set to 0.7, it means that a crystal oscillator in a controller accumulates 0.7 each time.

In S130, an operating current of the battery pack is detected through a current detection unit.

The current detection unit in this example includes a current sensing resistor configured to detect a magnitude of the current of the battery pack, such as the magnitude of a discharge current or charge current. In some examples, the current detection unit includes no current sensing resistor and performs estimation and acquisition through an algorithm. A method for the above estimation is not described in the present application, and those skilled in the art may acquire the current by a current estimation method in the related art.

In S140, a corresponding threshold is selected according to the acquired operating current of the battery pack.

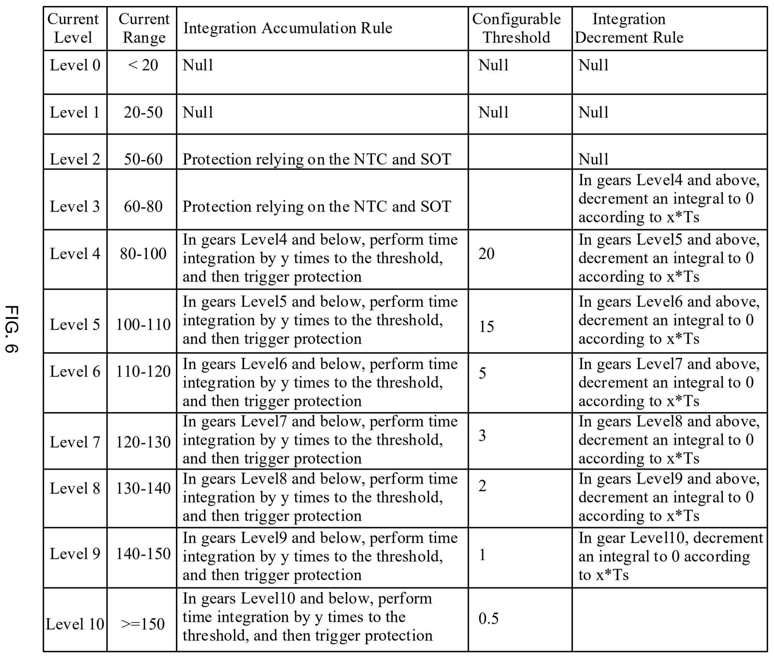

As shown in FIG. 6, operating currents of the battery pack are divided into eleven gears, such as Lv0 to Lv10, and each gear of the operating current corresponds to a lowest current. When the acquired operating current is greater than a lowest current in a gear, an integration rule in this gear is initiated. In some examples, when the operating current is less than or equal to 80, that is, in gears Lv0 to Lv3, a conventional overcurrent protection solution is adopted, for example, protection is provided relying on an NTC and an overcurrent protection chip. When the operating current is less than or equal to 50, no overcurrent protection is performed. The overcurrent protection method of the present application is mainly applied to working conditions where the operating current is greater than 80, that is, corresponding thresholds are given in Lv4 to Lv10.

In S150, seven integrals in Lv4 to Lv10 are calculated according to an integration accumulation rule.

Different gears have different thresholds. For example, a threshold in a gear Lv4 is set to 20, a threshold in a gear Lv5 is set to 15, and the higher the gear, the smaller the threshold. In this manner, when the operating current is relatively large, the controller can respond in a relatively short duration to prohibit the charging or discharging of the battery pack, thereby preventing the battery pack from an excessively high temperature which causes damage.

The integration accumulation rule includes the specific steps below.

In S1, gears in which integration accumulation needs to be performed are confirmed according to the acquired operating current. For example, when the operating current is 85, the integration accumulation needs to be performed in gears Lv4 to Lv10. For example, when the operating current is 115, the integration accumulation needs to be performed in gears Lv6 to Lv10.

In S2, a value of y is selected according to the acquired real-time temperature of the cell unit, and when the time integration is performed by a factor of y to the threshold, it is considered that the integration in this gear is completed. It is to be noted that in the integration process, the value of y varies with the temperature of the cell unit.

In S160, when the threshold in any one of Lv4 to Lv10 is exceeded, overcurrent protection is triggered, and the battery pack is prohibited from being discharged.

When the integration is completed in any one of the gears where the integration accumulation is initiated in step S150, the overcurrent protection may be triggered, and the controller outputs a current prohibition signal to prohibit the current of the battery pack from flowing in or out.

In S170, all values in Lv4 to Lv10 are calculated according to an integration decrement rule, and when all the values are decremented to 0, the overcurrent protection is released, and the battery pack is allowed to be discharged.

The integration decrement rule includes the specific steps below. A cumulative value in each gear when the preceding integration accumulation rule is executed is decremented according to the integration decrement rule. According to the acquired real-time temperature of the cell unit, a corresponding value of x is selected according to the table in FIG. 5, and the decrement is performed to 0 according to x times Ts. It is to be noted that in the integration process, the value of y varies with the temperature of the cell unit. Ts refers to a clock period of the crystal oscillator. When all the values are decremented to 0, the limitation of overcurrent protection is released, and a current permission signal for permitting the charging or discharging of a cell assembly is output.

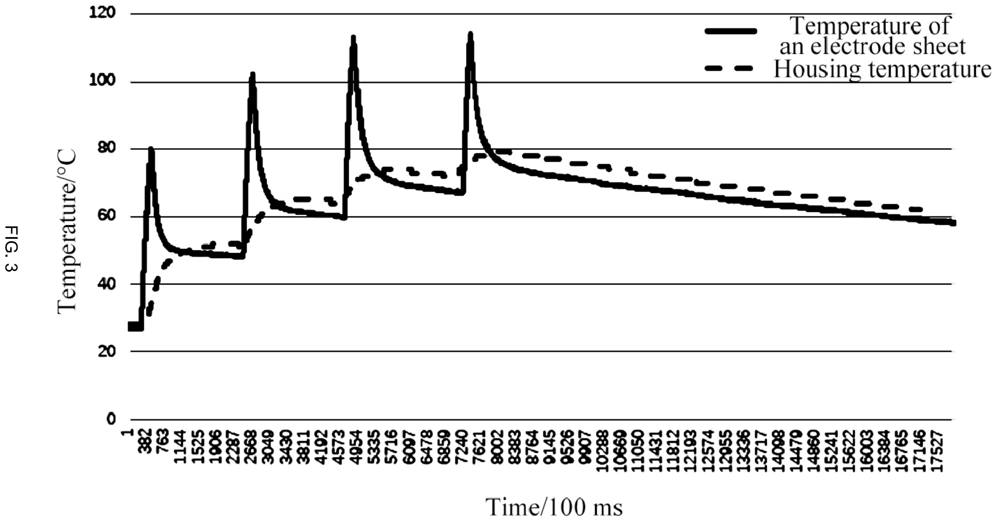

In the related art, compared with ordinary cylindrical batteries, full-tab batteries have greatly reduced internal resistance and greatly increased discharge rates through improvements in process and structure. However, after full-tab batteries are assembled into a battery pack, a high-rate discharge current results in rapid temperature rises of electrode sheets of the batteries, and the continuous discharge at a high rate may cause excessively high temperatures of the electrode sheets and a backflow of heat, damaging batteries. FIG. 3 shows a comparison between the surface temperature of the cell unit in the battery pack and the temperature of a positive/negative electrode sheet in the battery pack during operation of the battery pack. When the surface temperature of the cell unit in the battery pack is below 80°C, the temperature of the positive/negative electrode sheet in the battery pack can approximate 120°C, and the temperature rises at a very fast rate. Thus, the temperature of the positive/negative electrode sheet is transferred to the cell unit, causing irreversible damage to the cell unit. Therefore, it is necessary to propose an overcurrent protection strategy for high-rate discharge of the battery pack to restrict long-time and high-rate discharge, avoid damages to the battery pack, and ensure the service life of the battery pack. It is to be noted that the overcurrent protection solution of the present application may also be applied to the charging process of the battery pack.

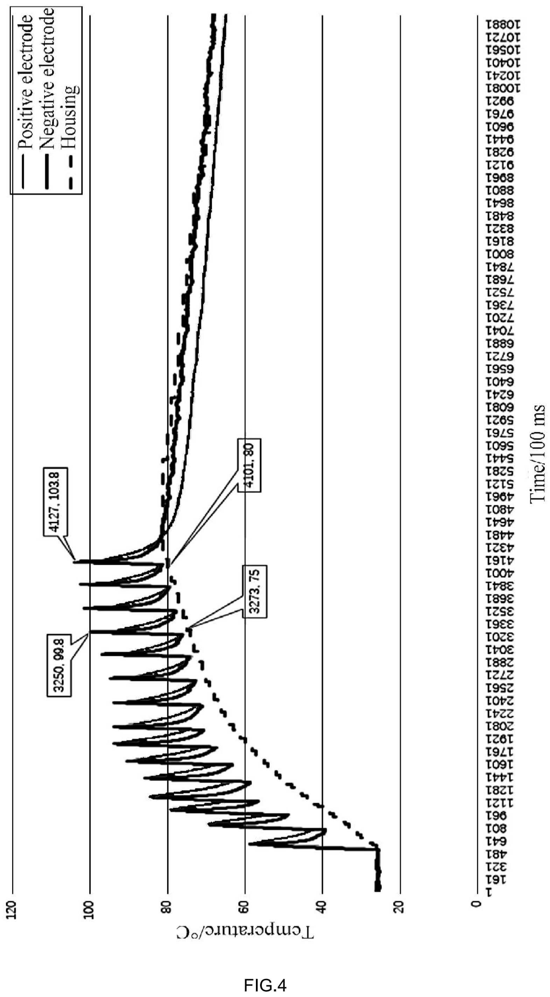

The overcurrent protection method of the present application ensures the high-rate discharge performance of the body, prevents the abuse of electrical energy of the battery pack, reduces the temperature of the electrode sheet during operation, improves the safety of the battery pack, and facilitates an increase in the service life of the battery pack. Referring to FIG. 4, when the battery pack is discharged at a high rate, the temperatures of the positive and negative electrode sheets can be effectively reduced, and the maximum temperatures can be controlled to be about 103°C, which are reduced significantly compared with the temperature of the electrode sheet in the battery pack without overcurrent protection.

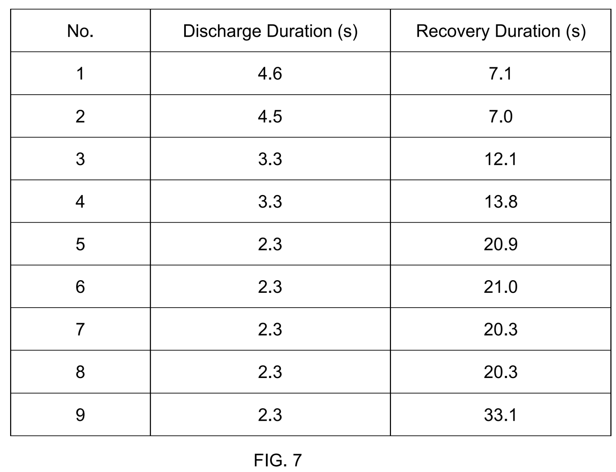

FIG. 7 shows test results of overcurrent protection of the battery pack, where discharge protection in a gear Lv7 (120-130 A) is stably triggered in the discharging process. As can be seen from the table, a recovery duration gradually increases as the temperature increases. When the temperature is lower than 40°C, 120 A discharge for about 4.5s requires protection for about 7s. When the temperature is lower than 60°C, discharge for 3.3s requires protection for about 13s. When the temperature is lower than 80°C, discharge for 2.3s requires protection for about 20s. When the temperature is higher than 80°C, the overcurrent protection lasts for about 33s.

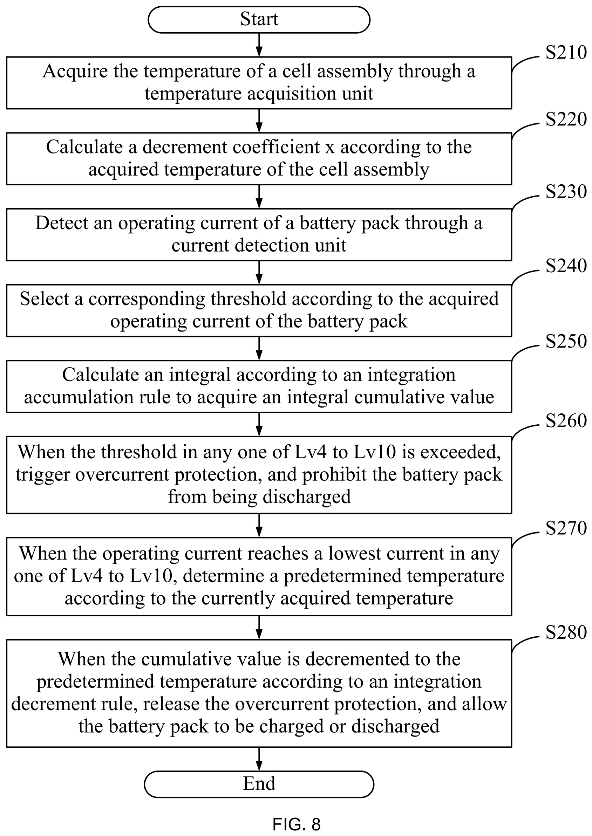

In another optional example, FIG. 8 is a flowchart of another overcurrent protection method for a battery pack according to the present application. Another implementation of the overcurrent protection method in a charging or discharging process of the battery pack is described in this example. For the similarities between this example and the preceding example, reference may be made to the description of the preceding example, and only differences between this example and the preceding example are described here. Referring to FIG. 8, the method includes the steps below.

In S210, the temperature of a cell assembly is acquired through a temperature acquisition unit.

The temperature acquisition unit in this example includes a temperature sensor and acquires the temperature of the cell assembly through the temperature sensor. In some examples, the temperature sensor may be disposed on a housing of the cell assembly to acquire the temperature of the housing of the cell assembly. In some examples, temperature sensors are disposed on surfaces of all cell units in the battery pack and configured to acquire the surface temperatures of all the cell units, record the highest surface temperature, and determine the temperature of the cell assembly according to the temperature of this cell unit. In some examples, the temperature sensor is disposed on a surface of a cell unit in the battery pack, where the cell unit is configured to be a cell unit with a fastest temperature increase in the battery pack or with a highest temperature relative to the other cell units, such as the central cell unit. The temperature of the cell assembly can also be determined from the temperature of the cell unit. In some examples, the temperature acquisition unit includes no temperature sensor and estimates the temperature of the cell assembly from parameters of the battery pack such as a current.

In S220, a decrement coefficient x is calculated according to the acquired temperature of the cell assembly.

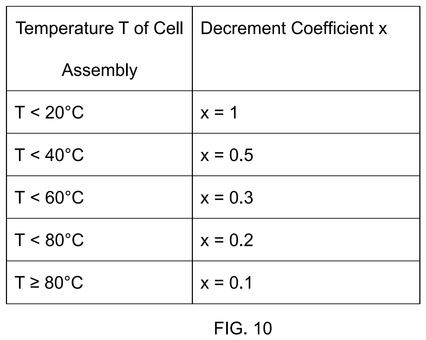

According to the above-acquired temperature, the decrement coefficient x is calculated in conjunction with the table in FIG. 10. For example, when the acquired temperature of the cell assembly is lower than 20°C, the decrement coefficient x is set to 1, when the acquired temperature of the cell assembly is higher than or equal to 20°C and lower than 40°C, the decrement coefficient x is set to 0.5, and so on. The decrement coefficient corresponding to the temperature may be acquired according to the acquired temperature of the cell assembly.

In S230, an operating current of the battery pack is detected through a current detection unit.

In S240, a corresponding threshold is selected according to the acquired operating current of the battery pack.

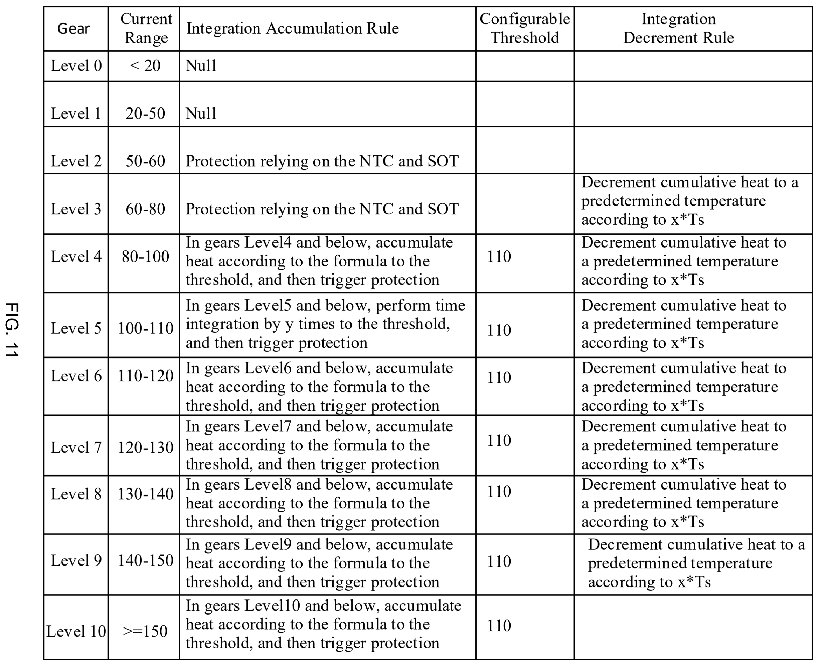

As shown in FIG. 11, operating currents of the battery pack are divided into eleven gears, such as Lv0 to Lv10, and each gear of the operating current corresponds to a lowest current. When the acquired operating current is greater than a lowest current in a gear, an integration rule in this gear is initiated. In some examples, when the operating current is less than or equal to 80, that is, in gears Lv0 to Lv3, a conventional overcurrent protection solution is adopted, for example, protection is provided relying on an NTC and an overcurrent protection chip. When the operating current is less than or equal to 50, no overcurrent protection is performed. The overcurrent protection method of the present application is mainly applied to working conditions where the operating current is greater than 80, that is, corresponding thresholds are given in Lv4 to Lv10. It is to be noted that FIG. 11 only illustrates that Lv4 to Lv10 have the same threshold, and in the present application, Lv4 to Lv10 may have different thresholds, which may be specifically designed according to actual requirements and is not specifically limited in the example of the present application.

In S250, an integral is calculated according to an integration accumulation rule to acquire an integral cumulative value.

In this example, when the operating currents of the battery pack are divided into different gears, different gears may have different thresholds or the same threshold. In the present application, different gears have the same threshold, for example. That is, thresholds corresponding to Lv4 to Lv10 are all 110.

The integration accumulation rule may specifically include calculating the integral according to an integral cumulative heat generation formula. The integral cumulative heat generation formula is expressed as follows:

$$\text{Tcell} + I * I * R * \Sigma t / Cm;$$

where Tcell denotes the temperature of the cell assembly, R denotes the resistance of an electrode sheet of the cell unit, $\Sigma t$ denotes a cumulative time, and Cm denotes a product of a specific heat capacity of the cell unit and the mass of the electrode sheet of the cell unit. Characteristic parameters of the cell unit may include the resistance of the electrode sheet of the cell unit, the specific heat capacity of the cell unit, and the mass of the electrode sheet of the cell unit.

In this example, calculating the integral according to the integral cumulative heat generation formula includes the specific steps below.

In S251, gears in which integration accumulation needs to be performed may be confirmed according to the acquired operating current. For example, when the operating current is 85, the integration accumulation needs to be performed in gears Lv4 to Lv10. For example, when the operating current is 115, the integration accumulation needs to be performed in gears Lv6 to Lv10.

In S252, time integration is performed according to the integral cumulative heat generation formula based on the acquired real-time temperature of the cell unit, the operating current, and the characteristic parameters of the cell unit to determine the integral cumulative value.

In S260, when the threshold in any one of Lv4 to Lv10 is exceeded, overcurrent protection is triggered, and the battery pack is prohibited from being discharged.

When the cumulative value in any one of the gears where the integration accumulation is initiated in step S240 reaches the threshold, the overcurrent protection may be triggered, and a controller outputs a current prohibition signal to prohibit the current of the battery pack from flowing in or out.

In S270, when the operating current reaches a lowest current in any one of Lv4 to Lv10, a predetermined temperature is determined according to the currently acquired temperature.

Referring to FIG. 11, when the operating current is greater than or equal to 80 and less than 100, it may be determined that the operating current reaches the lowest current in a gear Lv4, and the predetermined temperature of the cell assembly may be determined according to the temperature of the cell assembly acquired by the temperature acquisition unit. Meanwhile, the integration is performed in this gear according to the integral cumulative heat generation formula to acquire the cumulative value. If the cumulative value reaches the threshold and the operating current is greater than or equal to 80 and less than 100, the temperature of the cell assembly when the operating current reaches the gear Lv4 may be directly determined as the predetermined temperature. As the current continuously increases, if the cumulative value acquired through the integration according to the integral cumulative heat generation formula does not reach the threshold, when the operating current reaches the lowest current in a gear Lv5, the predetermined temperature of the cell assembly may be determined according to the current temperature of the cell assembly acquired by the temperature acquisition unit. Meanwhile, the integration continues being performed in this gear according to the integral cumulative heat generation formula to acquire the cumulative value until the cumulative value reaches the threshold. The gear of the operating current when the cumulative value reaches the threshold may be determined as a temperature determination gear, and the temperature acquired when the operating current reaches the lowest current in the temperature determination gear may be determined as the predetermined temperature to facilitate the subsequent calculation of integration decrement.

In S280, when the cumulative value is decremented to the predetermined temperature according to an integration decrement rule, the overcurrent protection is released, and the battery pack is allowed to be charged or discharged.

The integration decrement rule includes the specific steps below. The cumulative value determined according to the preceding integration accumulation rule is decremented according to the integration decrement rule. According to the acquired real-time temperature of the cell assembly, a corresponding value of x is selected according to the table in FIG. 10, and the decrement is performed to the predetermined temperature according to x times Ts. Ts refers to a clock period of a crystal oscillator. When the cumulative value is decremented to the predetermined temperature, the limitation of overcurrent protection is released, and a current permission signal for permitting the charging or discharging of the cell assembly is output.

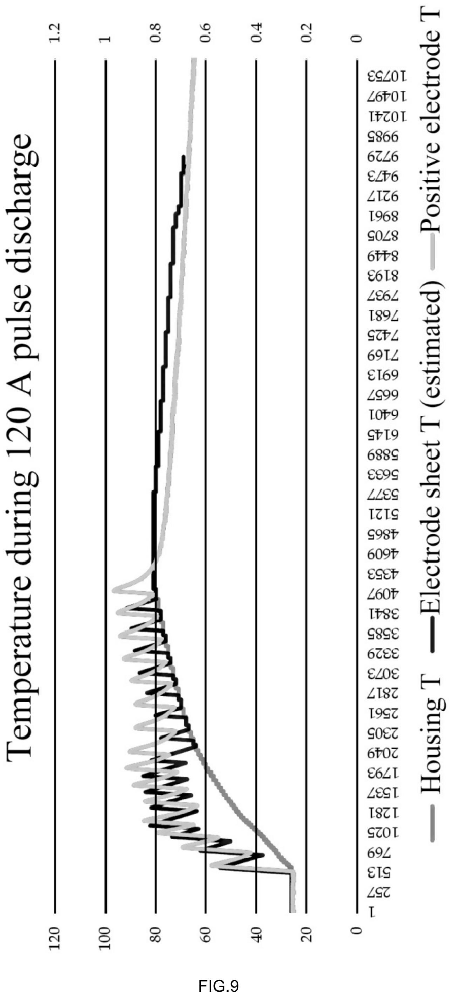

In view of the technical problem in the related art, which is shown in FIG. 3, the overcurrent protection method of the present application ensures the high-rate charge or discharge performance, prevents the abuse of electrical energy of the battery pack, reduces the temperature of the electrode sheet during operation, improves the safety of the battery pack, and facilitates an increase in the service life of the battery pack. Referring to FIG. 9, when the battery pack is discharged at a high rate, the measured temperature of the electrode sheet can be basically consistent with the estimated temperature of the electrode sheet, and the temperature of the electrode sheet can be effectively reduced, where the maximum temperature is controlled to be lower than 100°C, which is reduced significantly compared with the temperature of the electrode sheet in the battery pack without overcurrent protection.

In some examples, an overcurrent protection method for a battery pack is provided. The battery pack includes a cell assembly having at least one cell unit for storing or outputting electrical energy. The method includes acquiring the temperature of the cell assembly through a temperature acquisition unit; detecting an operating current of the battery pack through a current detection unit; and after detecting that the operating current reaches a predetermined value, setting a threshold according to the operating current, performing time integration based on the temperature to obtain a cumulative value, and outputting a current prohibition signal when the cumulative value reaches the threshold. When the operating current reaches a first predetermined value, a corresponding first threshold is acquired, and the time integration is performed based on the temperature to obtain a first cumulative value. When the operating current reaches a second predetermined value, a corresponding second threshold is acquired, and the time integration is performed based on the temperature to obtain a second cumulative value. In some examples, the first predetermined value is different from the second predetermined value, the first threshold is different from the second threshold, and the first cumulative value is different from the second cumulative value.

In some examples, an overcurrent protection method for a battery pack is provided. The battery pack includes a cell assembly having at least one cell unit for storing or outputting electrical energy. The overcurrent protection method for a battery pack includes acquiring the temperature of the cell assembly through a temperature acquisition unit; detecting an operating current of the battery pack through a current detection unit; and after detecting that the operating current reaches a predetermined value, setting a threshold according to the operating current, performing time integration based on the temperature of the cell assembly, the operating current, and a characteristic parameter of the at least one cell unit to obtain a cumulative value, and outputting a current prohibition signal when the cumulative value reaches the threshold. When the operating current reaches a first predetermined value, a corresponding first threshold is acquired, and the time integration is performed based on the temperature to obtain a first cumulative value. When the operating current reaches a second predetermined value, a corresponding second threshold is acquired, and the time integration is performed based on the temperature to obtain a second cumulative value. In some examples, the first predetermined value is different from the second predetermined value, the first threshold is the same as the second threshold, and the first cumulative value is different from the second cumulative value. The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

**Claims**

1. A power tool system (100), comprising:

 a power tool (2);
 a battery pack (1) for supplying power to the power tool, wherein the battery pack comprises a cell assembly (15) comprising at least one cell unit (151) for storing or outputting electrical energy and a temperature acquisition unit (3) acquiring a temperature of the cell assembly;
 a current detection unit (4) detecting an operating current of the battery pack; and
 a power management unit (6) acquiring the operating current and the temperature to manage a charging process or discharging process of the battery pack, outputting a current prohibition signal for prohibiting charging or discharging of the cell assembly when a predetermined prohibition duration elapses after the operating current reaches a predetermined value, and adjusting the predetermined prohibition duration based on at least two of a characteristic parameter of the at least one cell unit, the operating current, and the temperature of the cell assembly.

2. The power tool system according to claim 1, wherein the characteristic parameter of the at least one cell unit comprises at least one of a resistance of an electrode sheet, a mass of the electrode sheet, or a specific heat capacity of the electrode sheet of the at least one cell unit.

3. The power tool system according to claim 1, wherein the power management unit acquires a corresponding first threshold when the operating current reaches a first predetermined value and acquires a first predetermined prohibition duration based on the first threshold and at least one of the temperature of the cell assembly, the operating current, or the characteristic parameter of the at least one cell unit.

4. The power tool system according to claim 3, wherein the power management unit acquires a corresponding second threshold when the operating current reaches a second predetermined value and acquires a second predetermined prohibition duration based on the second threshold and at least one of the temperature of the cell assembly, the operating current, or the characteristic parameter of the at least one cell unit.

5. The power tool system according to claim 4, wherein the first predetermined value is different from the second predetermined value, and the first threshold is different from the second threshold.

6. The power tool system according to claim 4, wherein the first predetermined value is different from the second predetermined value, and the first threshold is the same as the second threshold.

7. The power tool system according to claim 1, wherein the power management unit outputs a current permission signal for permitting the charging or discharging of the cell assembly when a predetermined permission duration elapses after the current prohibition signal is output.

8. The power tool system according to claim 7, wherein the power management unit adjusting the predetermined permission duration based on the temperature of the cell assembly.

9. The power tool system according to claim 7, wherein the power management unit acquires a corresponding decrement coefficient according to the temperature of the cell assembly, acquires the predetermined permission duration based on the decrement coefficient and a predetermined temperature of the cell assembly, and determines the predetermined temperature of the cell assembly according to a current temperature of the cell assembly when the operating current reaches the predetermined value.

10. The power tool system according to claim 7, wherein the predetermined prohibition duration is less than or equal to the predetermined permission duration.

11. The power tool system according to claim 1, wherein the predetermined value is greater than or equal to 80.

12. The power tool system according to claim 1, wherein the temperature acquisition unit comprises at least one temperature sensor.

13. The power tool system according to claim 1, further comprising a charger (2') for charging the battery pack.

14. The power tool system according to claim 1, wherein the operating current comprises a discharge current or a charge current.

15. An overcurrent protection method for a battery pack (1) comprising a cell assembly (15) having at least one cell unit (151) for storing or outputting electrical energy, comprising:

acquiring a temperature of the cell assembly through a temperature acquisition unit (3); detecting an operating current of the battery pack through a current detection unit (4); and after detecting that the operating current reaches a predetermined value, setting a threshold according to the operating current, performing time integration based on the temperature to obtain a cumulative value, and outputting a current prohibition signal when the cumulative value reaches the threshold.

Acquire the temperature of a cell assembly through a temperature acquisition unit — S01

Detect an operating current of a battery pack through a current detection unit — S02

After detecting that the operating current reaches a predetermined value, set a threshold according to the operating current, and perform time integration based on at least one of the temperature of the cell assembly, the operating current, or a characteristic parameter of a cell unit to obtain a cumulative value — S03

Output a current prohibition signal when the cumulative value reaches the threshold — S04

FIG. 1

```
                    ┌─────────────────┐
                    │     Start       │
                    └────────┬────────┘
                             ▼
┌──────────────────────────────────────────────────┐  ── S110
│   Acquire the temperature (highest value) of a     │
│                     battery                         │
└──────────────────────┬─────────────────────────────┘
                       ▼
┌──────────────────────────────────────────────────┐  ── S120
│  Calculate an increment coefficient y and a        │
│  decrement coefficient x according to the          │
│                temperature                          │
└──────────────────────┬─────────────────────────────┘
                       ▼
┌──────────────────────────────────────────────────┐  ── S130
│     Acquire a discharge current of the battery     │
└──────────────────────┬─────────────────────────────┘
                       ▼
┌──────────────────────────────────────────────────┐  ── S140
│   Set a threshold according to the discharge       │
│                   current                           │
└──────────────────────┬─────────────────────────────┘
                       ▼
┌──────────────────────────────────────────────────┐  ── S150
│  Calculate seven integrals in Lv4 to Lv10          │
│  according to an integration accumulation rule      │
│  and an integration decrement rule                  │
└──────────────────────┬─────────────────────────────┘
                       ▼
┌──────────────────────────────────────────────────┐  ── S160
│  When the threshold in any one of Lv4 to Lv10 is   │
│  exceeded, trigger overcurrent protection, and      │
│  prohibit the battery pack from being discharged    │
└──────────────────────┬─────────────────────────────┘
                       ▼
┌──────────────────────────────────────────────────┐  ── S170
│  When all values in Lv4 to Lv10 are decremented     │
│  to 0, release the overcurrent protection, and      │
│  allow the battery pack to be discharged            │
└──────────────────────┬─────────────────────────────┘
                       ▼
                    ┌─────────────────┐
                    │      End        │
                    └─────────────────┘
```

FIG. 2

FIG. 3

FIG.4

| Increment Coefficient y | Decrement Coefficient x |
|---|---|
|  | T < 20°C, x = 1; |
| T < 40°C, y = 0.7; | T < 40°C, x = 0.5; |
| T < 60°C, y = 1; | T < 60°C, x = 0.3; |
| T < 80°C, y = 1.5; | T < 80°C, x = 0.2; |
| T ≥ 80°C, y = 3; | T ≥ 80°C, x = 0.1; |

FIG. 5

FIG. 6

EP 4 746 243 A1

| Current Level | Current Range | Integration Accumulation Rule | Configurable Threshold | Integration Decrement Rule |
|---|---|---|---|---|
| Level 0 | < 20 | Null | Null | Null |
| Level 1 | 20-50 | Null | Null | Null |
| Level 2 | 50-60 | Protection relying on the NTC and SOT | | Null |
| Level 3 | 60-80 | Protection relying on the NTC and SOT | | In gears Level4 and above, decrement an integral to 0 according to x*Ts |
| Level 4 | 80-100 | In gears Level4 and below, perform time integration by y times to the threshold, and then trigger protection | 20 | In gears Level5 and above, decrement an integral to 0 according to x*Ts |
| Level 5 | 100-110 | In gears Level5 and below, perform time integration by y times to the threshold, and then trigger protection | 15 | In gears Level6 and above, decrement an integral to 0 according to x*Ts |
| Level 6 | 110-120 | In gears Level6 and below, perform time integration by y times to the threshold, and then trigger protection | 5 | In gears Level7 and above, decrement an integral to 0 according to x*Ts |
| Level 7 | 120-130 | In gears Level7 and below, perform time integration by y times to the threshold, and then trigger protection | 3 | In gears Level8 and above, decrement an integral to 0 according to x*Ts |
| Level 8 | 130-140 | In gears Level8 and below, perform time integration by y times to the threshold, and then trigger protection | 2 | In gears Level9 and above, decrement an integral to 0 according to x*Ts |
| Level 9 | 140-150 | In gears Level9 and below, perform time integration by y times to the threshold, and then trigger protection | 1 | In gear Level10, decrement an integral to 0 according to x*Ts |
| Level 10 | >=150 | In gears Level10 and below, perform time integration by y times to the threshold, and then trigger protection | 0.5 | |

| No. | Discharge Duration (s) | Recovery Duration (s) |
|-----|------------------------|-----------------------|
| 1 | 4.6 | 7.1 |
| 2 | 4.5 | 7.0 |
| 3 | 3.3 | 12.1 |
| 4 | 3.3 | 13.8 |
| 5 | 2.3 | 20.9 |
| 6 | 2.3 | 21.0 |
| 7 | 2.3 | 20.3 |
| 8 | 2.3 | 20.3 |
| 9 | 2.3 | 33.1 |

FIG. 7

```
                    ┌─────────────────────┐
                    │        Start        │
                    └─────────────────────┘
                               │
                               ▼
┌───────────────────────────────────────────────────────┐  S210
│   Acquire the temperature of a cell assembly through a │
│              temperature acquisition unit              │
└───────────────────────────────────────────────────────┘
                               │
                               ▼
┌───────────────────────────────────────────────────────┐  S220
│      Calculate a decrement coefficient x according     │
│      to the acquired temperature of the cell assembly  │
└───────────────────────────────────────────────────────┘
                               │
                               ▼
┌───────────────────────────────────────────────────────┐  S230
│   Detect an operating current of a battery pack through│
│                 a current detection unit               │
└───────────────────────────────────────────────────────┘
                               │
                               ▼
┌───────────────────────────────────────────────────────┐  S240
│   Select a corresponding threshold according to the    │
│       acquired operating current of the battery pack   │
└───────────────────────────────────────────────────────┘
                               │
                               ▼
┌───────────────────────────────────────────────────────┐  S250
│      Calculate an integral according to an integration │
│   accumulation rule to acquire an integral cumulative  │
│                          value                          │
└───────────────────────────────────────────────────────┘
                               │
                               ▼
┌───────────────────────────────────────────────────────┐  S260
│  When the threshold in any one of Lv4 to Lv10 is       │
│  exceeded, trigger overcurrent protection, and prohibit│
│       the battery pack from being discharged           │
└───────────────────────────────────────────────────────┘
                               │
                               ▼
┌───────────────────────────────────────────────────────┐  S270
│  When the operating current reaches a lowest current in│
│  any one of Lv4 to Lv10, determine a predetermined     │
│  temperature according to the currently acquired       │
│                      temperature                        │
└───────────────────────────────────────────────────────┘
                               │
                               ▼
┌───────────────────────────────────────────────────────┐  S280
│  When the cumulative value is decremented to the       │
│  predetermined temperature according to an integration │
│  decrement rule, release the overcurrent protection,   │
│  and allow the battery pack to be charged or discharged│
└───────────────────────────────────────────────────────┘
                               │
                               ▼
                    ┌─────────────────────┐
                    │         End         │
                    └─────────────────────┘
```

FIG. 8

Temperature during 120 A pulse discharge

EP 4 746 243 A1

FIG.9

24

| Temperature T of Cell Assembly | Decrement Coefficient x |
|---|---|
| T < 20°C | x = 1 |
| T < 40°C | x = 0.5 |
| T < 60°C | x = 0.3 |
| T < 80°C | x = 0.2 |
| T ≥ 80°C | x = 0.1 |

FIG. 10

FIG. 11

| Gear | Current Range | Integration Accumulation Rule | Configurable Threshold | Integration Decrement Rule |
|------|---------------|-------------------------------|------------------------|----------------------------|
| Level 0 | < 20 | Null | | |
| Level 1 | 20-50 | Null | | |
| Level 2 | 50-60 | Protection relying on the NTC and SOT | | |
| Level 3 | 60-80 | Protection relying on the NTC and SOT | | Decrement cumulative heat to a predetermined temperature according to x*Ts |
| Level 4 | 80-100 | In gears Level4 and below, accumulate heat according to the formula to the threshold, and then trigger protection | 110 | Decrement cumulative heat to a predetermined temperature according to x*Ts |
| Level 5 | 100-110 | In gears Level5 and below, perform time integration by y times to the threshold, and then trigger protection | 110 | Decrement cumulative heat to a predetermined temperature according to x*Ts |
| Level 6 | 110-120 | In gears Level6 and below, accumulate heat according to the formula to the threshold, and then trigger protection | 110 | Decrement cumulative heat to a predetermined temperature according to x*Ts |
| Level 7 | 120-130 | In gears Level7 and below, accumulate heat according to the formula to the threshold, and then trigger protection | 110 | Decrement cumulative heat to a predetermined temperature according to x*Ts |
| Level 8 | 130-140 | In gears Level8 and below, accumulate heat according to the formula to the threshold, and then trigger protection | 110 | Decrement cumulative heat to a predetermined temperature according to x*Ts |
| Level 9 | 140-150 | In gears Level9 and below, accumulate heat according to the formula to the threshold, and then trigger protection | 110 | Decrement cumulative heat to a predetermined temperature according to x*Ts |
| Level 10 | >=150 | In gears Level10 and below, accumulate heat according to the formula to the threshold, and then trigger protection | 110 | |

EP 4 746 243 A1

100

```
┌─────────────────────────────────────────────────────────────┐
│                                                               │
│    ┌─────────────┐  3   ┌─────────┐  15        ┌─────────┐  2 │
│    │ Temperature │      │  Cell   │            │  Power  │    │
│    │ acquisition │──────│assembly │────────────│  tool   │    │
│    │    unit     │      │         │            │         │    │
│    └─────────────┘      └─────────┘            └─────────┘    │
│          │                   │         │                      │
│          │        ┌──────────┘         │                      │
│          │   ┌─────────┐  6      ┌──────────────┐  4          │
│          │   │  Power  │         │   Current    │             │
│          └───│management│────────│  detection   │             │
│              │   unit  │         │     unit     │             │
│              └─────────┘         └──────────────┘             │
│                                                               │
└─────────────────────────────────────────────────────────────┘
```

FIG. 12

FIG. 13

FIG. 14

FIG. 15

1

16

13

14

151

FIG. 16

1

2'

FIG. 17

FIG. 18

**EUROPEAN SEARCH REPORT**

Application Number

EP 25 21 3523

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/115892 A1 (ICHIKAWA YOSHITAKA [JP] ET AL) 14 April 2022 (2022-04-14) * paragraphs [0167], [0180], [0185], [0260], [0361], [0229], [0347], [0362], [0309], [0334] - paragraphs [0039], [0042] - [0043], [0074], [0079]; figures 1,26,30 * ----- | 1-15 | INV. H02J7/62 |
| X | US 2008/180059 A1 (BLACK & DECKER INC [US]; BLACK & DECKER INC) 31 July 2008 (2008-07-31) * paragraphs [0015], [0026], [0041], [0053], [0052], [0091], [0092], [0093]; figures 3B, 4, 9, 17-18 * ----- | 1,2,12, 13,15 | |

TECHNICAL FIELDS
SEARCHED     (IPC)

H02J
B25C
B25F

The present search report has been drawn up for all claims

| Place of search | Date of completion of the search | Examiner |
|---|---|---|
| Munich | 19 March 2026 | Pavlosyuk, Mikhail |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 4 746 243 A1**

## ANNEX TO THE EUROPEAN SEARCH REPORT
## ON EUROPEAN PATENT APPLICATION NO.

EP 25 21 3523

19-03-2026

| Patent document cited in search report | | Publication date | Patent family member(s) | | Publication date |
|---|---|---|---|---|---|
| US 2022115892 | A1 | 14-04-2022 | CN | 112672851 A | 16-04-2021 |
| | | | EP | 3851252 A1 | 21-07-2021 |
| | | | JP | 7427599 B2 | 05-02-2024 |
| | | | JP | WO2020054775 A1 | 02-09-2021 |
| | | | US | 2022115892 A1 | 14-04-2022 |
| | | | WO | 2020054775 A1 | 19-03-2020 |
| US 2008180059 | A1 | 31-07-2008 | CN | 101916887 A | 15-12-2010 |
| | | | CN | 102637844 A | 15-08-2012 |
| | | | EP | 1673828 A2 | 28-06-2006 |
| | | | JP | 2007520180 A | 19-07-2007 |
| | | | TW | 200529532 A | 01-09-2005 |
| | | | US | 2005077878 A1 | 14-04-2005 |
| | | | US | 2008180059 A1 | 31-07-2008 |
| | | | US | 2009146614 A1 | 11-06-2009 |
| | | | WO | 2005038952 A2 | 28-04-2005 |

EPO FORM P0459